# EUROPEAN PATENT SPECIFICATION

(11) **EP 3 303 795 B1**
(45) Date of publication and mention of the grant of the patent: **15.04.2020**
(21) Application number: 15732298.3
(22) Date of filing: 03.06.2015
(51) Int. Cl.: F02B 21/00, F02N 9/04, F01L 13/04, F02D 13/02, F01L 9/02, F02M 23/00

(54) **AN INTERNAL COMBUSTION PISTON ENGINE, A METHOD OF STARTING AN INTERNAL COMBUSTION PISTON ENGINE AND A CONTROL UNIT**
EIN KOLBENVERBRENNUNGSMOTOR UND EIN VERFAHREN ZUM STARTEN DES VERBRENNUNGSMOTOREN SOWIE EINE STEUEREINHEIT
UN MOTEUR A COMBUSTION INTERNE PISTON ET PROCEDE DE DEMARRAGE DU MOTEUR COMBUSTION INTERNE PISTON ET UNE UNITÉ DE COMMANDE

(43) Date of publication of application: 11.04.2018
(73) Proprietor: Wärtsilä Finland Oy, 65100 Vaasa (FI)
(72) Inventor: HYÖTY, Ilari, FI-65200 Vaasa (FI); SUNDSTEN, Magnus, FI-65380 Vaasa (FI)
(74) Representative: Genip Oy
(86) International application number: PCT/FI2015/050383
(87) International publication number: WO 2016/193527

(56) References cited:
- WO-A1-2010/129872
- WO-A1-2012/156584
- FR-A1- 2 512 501

## Description

### Technical field

The present invention relates to an internal combustion piston engine according to the preamble of claim 1.

The present invention relates also to a method of starting an internal combustion piston engine. The present invention relates also to a control unit.

### Background art

Internal combustion engines used in ships or power plants are usually started by using pressurized air that is injected sequentially into the cylinders of the engine for rotating the crankshaft. It is desirable to minimize the consumption of starting air in order to save energy and storage space of air.

WO 2007/003693 A1 discloses a pressure medium operated starting system for a piston engine. The pressure medium operated starting system comprises a pipe system that connects a pressure medium source to each cylinder of the engine. Each cylinder is provided with a starting valve for controlling the admission of the pressure medium into the cylinder. The starting system comprises a control valve for controlling the operation of the starting valve and a timing equipment for controlling the operation of control valves. The timing equipment comprises a control part in mechanical connection with a rotating part of the engine.

WO 2012/156584 A1 discloses a multi-cylinder piston engine comprising at least one cam-operated valve lifting device for each cylinder of the engine wherein the valve lifting device is arranged to open a gas exchange valve. The engine comprises a starting arrangement having a pressure medium source, at least one starting valve for admitting the pressure medium into the cylinder of the engine, means for connecting the pressure medium source to the starting valves and a control device for each cylinder for controlling the operation of the starting valve. Each control valve is arranged to be operated by a gas exchange cam of the respective cylinder.

The accurate control of the air injection timing is needed even in case of malfunction occurs in the starting system.

An object of the invention is to provide an internal combustion piston engine wherein the introduction of oxygen containing starting gas into cylinders of the engine is significantly improved compared to the prior art solutions.

Another object of the invention is to provide a method of starting an internal combustion engine, which method provides a more reliable starting procedure compared to the prior art solutions.

### Disclosure of the Invention

An object of the invention is met by an internal combustion piston engine comprising an intake channel for introducing oxygen containing gas into cylinders of the engine, the engine further comprising an arrangement for introducing additional oxygen containing gas into the cylinders of the engine, the arrangement comprising:
- a pressure medium source for supplying the additional oxygen containing gas,
- at least one injection valve arranged in connection with the cylinders of the engine for introducing the additional oxygen containing gas into the cylinder of the engine,
- a main flow conduit by means of which the pressure medium source is arranged in flow connection with the at least one injection valve,
wherein the injection valve is provided with a pneumatically operated actuator device arranged to accomplish opening and closing of the injection valve under influence of the pressure medium to the actuator device.

It is characteristic to the invention that the arrangement for introducing additional oxygen containing gas comprises a control fluid conduit for introducing the pressure medium to the pneumatically operated actuator device of the injection valve, and that the control fluid conduit is provided with a first control valve and a second control valve arranged parallel in the control fluid conduit for control the fluid communication to the pneumatically operated actuator device of the injection valve, and that the control fluid conduit is provided with a switch valve arranged to provide a flow connection of the control fluid conduit alternatively with one of the first control valve and the second control valve.

This provides an internal combustion piston engine which enables reliable arrangement suitable for introducing oxygen containing gas into the cylinder of the engine.

According to an embodiment of the invention, the control fluid conduit extends from the main flow conduit to the pneumatically operated actuator device of the injection valve.

According to an embodiment of the invention, the first control valve and the second control valve coupled with a common pneumatically operated actuator device are arranged to accomplish opening and closing of the injection valve under influence of the pressure medium.

According to an embodiment of the invention, the first control valve and the second control valve coupled with a dedicated pneumatically operated actuator device, each of which is arranged to accomplish opening and closing of the injection valve under influence of the pressure medium.

According to an embodiment of the invention, the second control valve is cam actuated. The engine is provided with a shaft having a cam operating synchronized manner with the crank shaft of the engine.

According to an embodiment of the invention, the first control valve is solenoid actuated.

According to an embodiment of the invention, the arrangement comprises a control unit comprising instructions to control an operation of the first control valve.

According to an embodiment of the invention, the arrangement comprises a third control valve arranged parallel with the first control valve and the second control valve in the control fluid conduit for controlling the fluid communication to the pneumatically operated actuator device of the injection valve and the switch valve is arranged to provide a flow connection of the control fluid conduit alternatively with one of the first control valve, the second control valve and the third control valve.

According to an embodiment of the invention, the third control valve is actuated by a cam in the engine.

Another object of the invention is met by a method of starting an internal combustion piston engine, in which method during the starting procedure:
- the pressurized air is led from a pressure medium source to a number of individual cylinders of the engine via at least one injection valve arranged in connection with the cylinders of the engine,
- the at least one injection valve is actuated between open and closed position by a pneumatically operated actuator device arranged to accomplish opening and closing of the injection valve under influence of the pressure medium to be open during the power stroke of the cylinder such that the engine is cranked by means of the introduced pressurized air,
- at least one starting characteristic (e.g. cranking speed) of the engine is monitored during the starting procedure and a set target value is assigned to the at least one starting characteristic,
- the pneumatically operated actuator device is controlled by a first control valve via which the pressure medium source is controllably connected to the pneumatically operated actuator device,
- in case the at least one starting characteristic will not reach the set target value, the pneumatically operated actuator device is controlled by a second control valve via which the pressure medium source is controllably connected to the pneumatically operated actuator device, and which second control valve is operated by a cam system of the engine, and
- an introduction of the pressure medium to the pneumatically operated actuator is controlled by a switch valve that introduces the pressure medium alternatively with one of the first control valve or the second control valve.

This provides a reliable method to start the engine and the starting procedure is considerably improved compared to prior art solutions.

According to an embodiment of the invention, the pneumatically operated actuator device is controlled by the first valve being a solenoid valve.

According to an embodiment of the invention, the method comprises a step of controlling the first control valve in response to a crank angle.

### Brief Description of Drawings

In the following, the invention will be described with reference to the accompanying exemplary, schematic drawings, in which
Figure 1 illustrates an internal combustion piston engine comprising an arrangement for introducing additional oxygen containing gas according to the first embodiment of the invention,
Figure 2 illustrates an arrangement for introducing additional oxygen containing gas according to an embodiment of the invention,
Figure 3 illustrates an arrangement for introducing additional oxygen containing gas according to another embodiment of the invention, and
Figure 4 illustrates an arrangement for introducing additional oxygen containing gas according to another embodiment of the invention.

### Detailed Description of Drawings

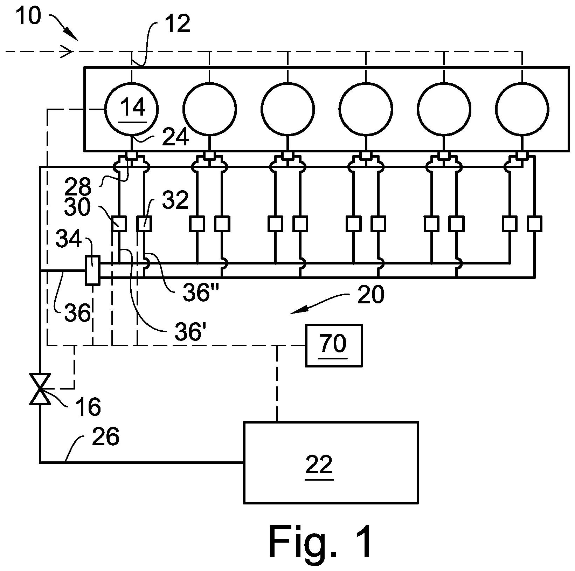

Figure 1 depicts schematically an internal combustion piston engine 10. For the sake of brevity, the internal combustion piston engine will be called from now on as the engine. In the embodiment of Fig. 1, the engine 10 comprises six cylinders 14 arranged inline. There could be, however, any reasonable number of cylinders arranged for instance inline or in a V-configuration.

The engine 10 comprises an arrangement 20 for introducing additional oxygen containing gas from a pressure medium source 22 into the cylinders 14 of the engine 10. The arrangement is separate from the intake air system of the engine. The arrangement 20 comprises a main flow conduit 26 which connects the pressure medium source 22 to each cylinder 14 of the engine 10. Thus the pressure medium source 22 is arranged for supplying the additional oxygen containing gas to the cylinders 14 of the engine 10. The pressure medium source 22 is arranged in flow communication with the at least one injection valve 24 of the cylinder 14 of the engine 10 via the main flow conduit 26. The arrangement 20 comprises at least one injection valve 24 arranged in connection with each cylinder of the engine. The injection valves 24 are arranged for introducing the additional oxygen containing gas into the cylinder 14 of the engine 10. In the embodiment shown in Fig. 1, each cylinder 14 is provided only one injection valve 24. The number of injection valves 24 in the cylinder may be greater than one. The main flow conduit 26 is provided with a master valve 16 arranged to open or close flow communication from the pressure medium source 22 to control the introduction of the pressurized media via the main conduit 26 to the injection valves 24. According to an embodiment of the invention and as illustrated in Fig.1, the engine 10 is provided only one master valve 16 arranged in the main flow conduit 26.

The injection valve 24 is provided with a pneumatically operated actuator 28 arranged to accomplish opening and closing of the injection valve 24 under influence of the pressure medium. Each injection valve 24 is provided with its own pneumatically operated actuator device 28.

The arrangement 20 for introducing the additional oxygen containing gas comprises a control fluid conduit 36 for introducing pressure medium, i.e. a control fluid, to the actuator device 28 of the injection valve 24. The control fluid conduit 36 extends from the main flow conduit 26 to the pneumatically operated actuator device 28 of the injection valve 24. Thus the control fluid conduit 36 is arranged to branch from the main flow conduit 26 from a location downstream the master valve 16.

The control fluid conduit 36 further comprises two parallel branches: a first control fluid branch 36' and a second control fluid branch 36" leading to the pneumatically operated actuator device 28. The first control fluid branch 36' of the control fluid conduit 36 is provided with a first control valve 30. The second control fluid branch 36" is provided with a second control valve 32. The first control valve 30 and the second control valve 32 are arranged parallel with respect to each other in the control fluid conduit 36. The first control valve 30 and the second control valve 32 are arranged to control the fluid communication from the main flow conduit 26 to the pneumatically operated actuator device 28. The first control valve 30 and the second control valve 32 are coupled with a common pneumatically operated actuator device 28 of the cylinder 14.

The control fluid conduit 36 is provided with a switch valve 34 arranged upstream the first control valve 30 and the second control valve 32 with respect to a fluid flow direction from the pressure medium source 22 to the pneumatically operated actuator device 28. The switch valve 34 is arranged to provide a flow connection of the control fluid conduit 36 i.e. the pressure medium source, alternatively with one of the first control valve 30 and the second control valve 32 to the pneumatically operated actuator device 28. Thus the switch valve 34 controls the control fluid to flow either into the first control fluid branch 36' or into the second control fluid branch 36". This means that the control fluid introduced from the main flow conduit 26 into the control fluid conduit 36 is introduced either via the first control valve 30 or via the second control valve 32 into the pneumatically operated actuator device 28. When the control fluid is allowed to flow from the main flow conduit 26 into the actuator device 28 i.e. the pressure of the control fluid is allowed to effect the actuator device 28, the injection valve 24 is opened and the additional oxygen containing gas is allowed to flow via the main flow conduit 26 into the corresponding cylinder 14 of the engine 10.

According to an embodiment of the invention and as illustrated in Fig. 1, the engine 10 is provided with one switch valve 34 to provide a flow connection of the control fluid conduit 36 alternatively with one of the first control valve 30 and the second control valve 32. The switch valve 34 is common for all the first control valves 30 and the second control valves 32 as illustrated in Fig. 1. In Fig. 1, each injection valve 24 is arranged in connection with its own first i.e. a dedicated first control valve 30 and the second control valve 32.

According to an embodiment of the invention, the first control valve 30 is actuated by a solenoid or alike. According to an embodiment of the invention, the second control valve 32 is cam actuated, such that a shaft provided with a cam is mechanically operated by the engine.

The engine 10 further comprises an intake channel 12 for introducing oxygen containing gas into cylinders 14 of the engine 10. The engine is advantageously provided with a turbocharger and intake channel 12 is arranged to lead from the compressors part of the turbocharger to the engine (not shown).

The arrangement 20 for introducing oxygen containing gas from a pressure medium source 22 into cylinders 14 of the engine 10 further comprises a control unit 70. The control unit is arranged to control and monitor the operation of the master valve 16, the switch valve 34, the first control valve 30, the second control valve 32 and the pressure medium source 22. In addition, the control unit 70 is arranged to monitor at least one engine characteristic (e.g. starting characteristic, cranking speed). The dashed lines from the control unit 70 indicates signal lines and signal transfer between the control unit and the respective appliances of the engine. The control unit 70 comprises instructions to start the engine 10. The control unit 70 comprises instruction to run the engine 10.

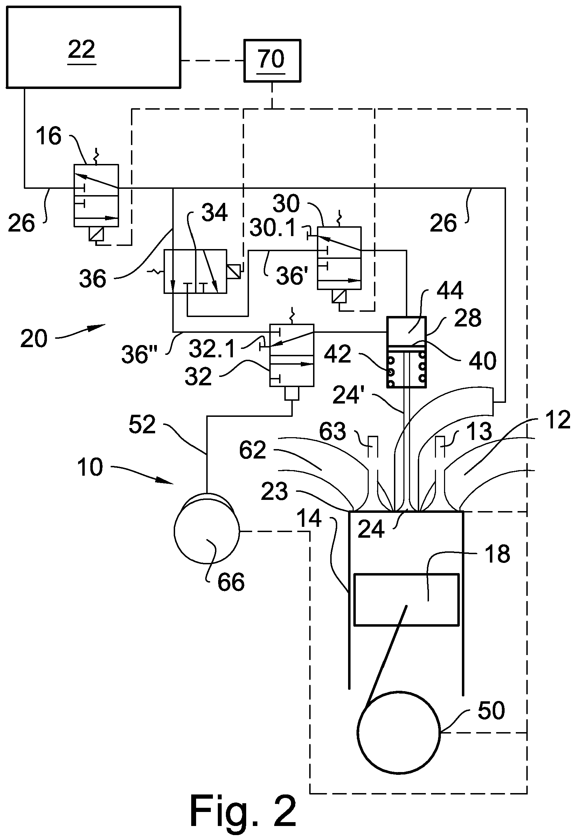

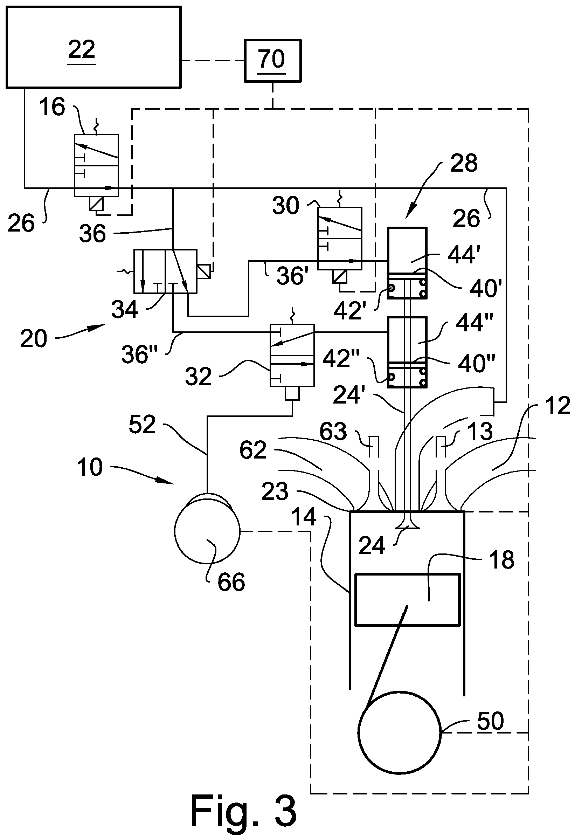

According to an embodiment of the invention, the arrangement 20 is operated for starting the engine 10 by practising a starting procedure. The starting procedure of the engine 10 is initiated by opening the master valve 16 common to all cylinders 14 of the engine 10. This way the pressurized pressure medium is available to commence the procedure. The starting procedure of the engine 10 comprises further steps of leading pressurized air from the pressure medium source 22 to a number of individual cylinders 14 of the engine 10 via the at least one injection valve 24 arranged in connection with the cylinders of the engine 10. In this embodiment, pressurized air is used but in practice an engine may be started with other pressurized gas as well. The at least one injection valve 24 is actuated between open and closed position by the pneumatically operated actuator device 28. During the starting procedure, the actuator device 28 accomplish opening and closing of the injection valve 28 under influence of the pressure medium. The opening is timed to take place during the power stroke of the cylinder such that the engine 10 is cranked by means of the introduced pressurized air. The pressurized air forces the piston of the cylinder downwards i.e. towards a crankshaft of the engine 10 and rotates the crankshaft of the engine 10 (cf. Fig. 2 and Fig. 3). The control unit 70 monitors at least one starting characteristic of the engine during the starting procedure, such as cranking speed. According to an embodiment of the invention a set target value is assigned to the at least one starting characteristic.

In the starting procedure the pneumatically operated actuator device 28 is controlled primarily by the first control valve 30, which is called as a primary mode of operation. During the primary mode of operation the pressure medium source 22 is controllably connected to the pneumatically operated actuator device 28 via the first control valve 30. This is ruled by controlling the switch valve 34 such the first branch 36' is the active one. According to an embodiment of the invention, the control unit 70 is provided with timing instructions to operate the first control valve 30 so as to sequentially switch on and off the connection of the main flow conduit 26 to the pneumatically operated actuators 28 of the injection valves 24 for sequentially opening and closing the injection valves 24. In the procedure the at least one starting characteristic is compared with the set target value and, in case the at least one starting characteristic will not reach the set target value, the operation is shifted to a secondary mode of operation where the switch valve 34 such the second branch 36' is the active one. Now, the pneumatically operated actuator device 28 is controlled by the second control valve 32 via which the pressure medium source is controllably connected to the pneumatically operated actuator device 28. The second control valve 32 is operated by a cam system of the engine 10. The cam system is arranged to operate the second control valve 32 so as to switch on and off the connection of the main flow conduit 26 via the control flow conduit 36 to the pneumatically operated actuators 28 of the injection valves 24 in a mechanically synchronized manner with the engine, for sequentially opening and closing the injection valves 24.

It should be noted that in case the starting characteristic reaches the respective set target value, the pneumatically operated actuator device 28 is maintained under control of the first control valve 30. In other words, the second control valve 32 provides a backup arrangement for starting the engine 10 safely in all circumstances. According to an embodiment of the invention, the set target value is advantageously a value indicating revolutions per minute. According to an embodiment of the invention, an occurrence of the starting characteristic will not reaching the set target value, is used as an indication of a malfunction or disturbance in the arrangement, for example, broken sensor(s) or problems with the first control valve 30.

Figure 2 illustrates an embodiment of the invention more in detailed manner. Same features are shown using the same reference numbers as in Fig. 1. Figure 2 illustrates particularly an operational mode wherein the master valve 16, the switch valve 34, the first control valve 30 and the second control valve 32 are in an inactive state. In the inactive state, the master valve 16 is closed and the flow communication from the pressure medium source 22 to the cylinder 14 of the engine 10 is closed.

The pneumatically operated actuator device 28 is provided with a chamber 44 for receiving the control fluid. Both of the branches 36',36" are connected to the chamber 44 and the control fluid effects into the chamber 44 either via the first control valve 30 or via the second control valve 32. Thus, the first control valve 30 and the second control valve 32 are coupled with a common pneumatically operated actuator device 28. The pneumatically operated actuator device 28 is coupled with the injection valve 24. The injection valve 24 is arranged in this embodiment to a cylinder head 23 of the engine 10.

The injection valve 24 is provided with a stem 24', which stem 24' extends into the chamber 44 of the pneumatically operated actuator device 28. The stem 24' is provided with a piston element 40 at its first end, which piston element 40 is arranged to be able to reciprocate inside the chamber 44. A second end of the stem i.e. an end constituting the injection valve 24 is located in a cylinder head 23. The injection valve 24 is kept closed by means of a spring element 42. The spring element 42 is arranged in connection with the piston element 40. Thus, in the inactive state, the spring element 42 urges the injection valve 24 to its closing position. Dimensions of the piston element 40 are chosen and/or the piston element may be provided with a sealing system, so that leaking of the control fluid in the chamber 44 into a space wherein the spring element 42 is arranged is prevented to a desired extent.

Figure 2 schematically illustrates that the first control valve 30 is provided with a plug 30.1 that prevents the fluid to flow from the chamber 44 when the second control valve 32 is open. Thus the pressure in the chamber 44 increases when the second control valve 32 is open that compresses the spring element 42 and urges the injection valve into the cylinder 14. The injection valve 24 is in the position that the flow communication from the pressure medium source 22 to the cylinder 14 of the engine 10 is open (cf. Fig. 3). Respectively, the second control valve 32 is provided with a plug 32.1 that prevents the fluid to flow from the chamber 44 when the first control valve 30 is open. Thus the pressure in the chamber 44 increases when the first control valve 32 is opened, that compresses the spring element 42 and urges the injection valve into the cylinder 14. The flow communication from the pressure medium source 22 to the cylinder 14 of the engine 10 is open (cf. Fig. 3).

The second control valve 32 arranged in the second control fluid branch 36" of the control fluid conduit 36 is arranged in mechanical and/or hydraulic connection 52 with a cam 66 of the engine 10. Thus, the operation of the second control valve 32 is directly related to the position of the cam 66 of the engine 10.

Figure 2 illustrates schematically a piston 18 arranged to reciprocate in the cylinder 14 of the engine 10. The piston 18 is connected to a crankshaft 50 of the engine 10. According to an embodiment of the invention, the control unit 70 comprises instructions to detect a crank angle position i.e. the rotational position of the crank shaft. The method of starting the engine 10 shown in Fig. 2 is carried out in a similar manner as in the embodiment shown in Fig. 1. According to an embodiment of the invention, the operation of the first control valve 30 is controlled by the control unit 70 in response to the crank angle.

Figure 2 illustrates also schematically that the intake channel 12 is provided with an intake valve 13 arranged to the cylinder head 23 of the engine 10 so as to control an introduction of oxygen containing gas into the cylinder 14 of the engine 10. It is also illustrated an exhaust channel 62, which exhaust channel 62 is provided with an exhaust valve 63 arranged to the cylinder head 23 of the engine 10 so as to control exhaust gases to flow from the cylinder 14 of the engine 10 into the exhaust channel 62.

As can be seen from Fig. 2, the engine 10 comprises separately an intake channel 12 for introducing oxygen containing gas via the intake valve 13 and a main conduit 16 for introducing additional oxygen containing gas via the injection valve 24. During the starting procedure, the intake valve 13 and the exhaust valve 62 are closed whereas the injection valve 24 is open so as to introduce pressurized air into the cylinder 14 of the engine 10.

Figure 3 illustrates another embodiment of the invention in more detailed manner. Same features are shown using same reference number as in Fig. 1 and in Fig. 2.

In the embodiment shown in Figure 3, the pneumatically operated actuator device 28 is provided with a first chamber 44' and a second chamber 44". The first chamber 44' is arranged in flow communication with the first control fluid branch 36'. The second chamber 44" is arranged in flow communication with the second control fluid branch 36". The first control valve 30 and the second control valve 32 are coupled with a dedicated pneumatically operated actuator device 28, each of which is arranged to accomplish opening and closing of the injection valve 24 under influence of the pressure medium.

The operation of the injection valve 24 is controlled with the pneumatically operated actuator device 28. Fig. 3 particularly illustrates an operational mode wherein the master valve 16 is in an active state and opens the flow communication from the pressure medium source 22 to the engine 10. In Fig. 3, the switch valve 34 in the control fluid conduit 36 is arranged to the state wherein the control fluid is directed to the first control valve 30. The first control valve 30 is open that is in a state wherein the control fluid is allowed to flow into the first chamber 44' of the pneumatically operated actuator device 28. An amount of control fluid increases in the first chamber 44' that opens the injection valve 24. In the opening position, the injection valve 24 extends into the cylinder 14.

The stem 24' is provided with a piston element 40' at its first end, which piston element 40' is arranged to be able to reciprocate inside the first chamber 44'. The stem 24' is provided with a second piston element 40" at an intermediate portion, which piston element 40" arranged to be able to reciprocate inside the second chamber 44". A second end of the stem i.e. an end constituting the injection valve 24 is extending in this embodiment through a cylinder head 23 into the cylinder 14.

In the inactive state, injection valve 24 is kept closed by means of spring elements 42' and 42". A first spring element 42' is arranged in the first chamber 44' of the pneumatically operated actuator device 28. A second spring element 42" is arranged in the second chamber 44". The first spring element 42' is arranged in connection with the piston element 40'. The second spring element 42" is arranged in connection with the second piston element 40". The spring elements 42' and 42" are arranged such that those keep the injection valve closed even if the master valve 16 is open and the first control valve 30 and the second control valve 32 are closed i.e. in the case no control fluid is allowed to flow into the pneumatically operated actuator device 28. Thus, in the inactive state, the spring elements 42' and 42" urge the injection valve 24 to its closing position.

The first control fluid branch 36' leads via the first control valve 30 to the first chamber 44' of the pneumatically operated actuator device 28. The second control fluid branch 36" leads via the second control valve 32 to the second chamber 44" of the pneumatically operated actuator device 28. Dimensions of the piston element 40' are chosen and/or the piston element may be provided with a sealing system, so that leaking of the control fluid in the first chamber 44' into a space wherein the first spring element 42' is arranged is prevented to a desired extent. Leaking of the control fluid from the first chamber 44' into the second chamber 44" is prevented. Correspondingly, dimensions of the second piston element 40" are chosen and/or the piston element may be provided with a sealing system, so that leaking of the control fluid in the second chamber 44" into a space wherein the second spring element 42" is arranged is prevented to a desired extent. Even though both the first chamber 44' and the second chamber 44" are provided with spring elements, it is possible that only one chamber is provided with a spring element. The stem 24', however, needs to have one piston element 40' and 40" in each chamber 44' and 44".

In Fig. 3, a method of starting the engine is carried out in a similar manner as in the embodiments shown in Fig. 1 and in Fig. 2.

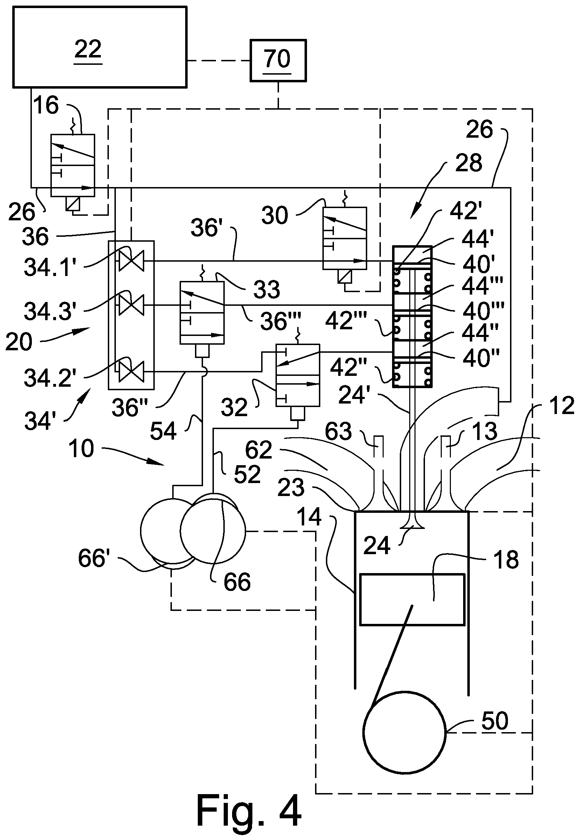

Figure 4 illustrates yet another embodiment of the invention. Same features are shown using same reference number as in Fig. 1, Fig. 2 and in Fig. 3. The arrangement 20 comprises the control fluid conduit 36, which control fluid conduit 36 comprises three parallel branches: the first control fluid branch 36', the second control fluid branch 36" and a third control fluid branch 36'" leading to the pneumatically operated actuator device 28. Similarly as in Figure 2, the first control fluid branch 36' is provided with the first control valve 30 and the second control fluid branch with the second control valve 32. The third control branch 36'" is provided with a third control valve 33. The third control valve 33 is cam actuated.

The arrangement 20 is provided with a switch valve 34' arranged to the control fluid conduit 36. The switch valve 34' comprises three valve elements 34.1', 34.2' and 34.3'. The switch valve 34' is arranged to provide a flow connection of the control fluid conduit 36 alternatively with one of the first control valve 30, the second control valve 32 and the third control valve 33. If a first valve element 34.1' of the switch valve 34' opens the flow communication from the control fluid conduit 36 into the first branch 36', a second valve element 34.2' of the switch valve 34' correspondingly remains closed and a third valve element 34.3' of the switch valve 34' correspondingly remains closed so preventing control fluid to flow into the second branch 36" and into the third branch 36"'. Figure 4 illustrates an embodiment wherein the first valve element 34.1' of the switch valve 34' and the first control valve 30 are open. Similarly, if the second valve element 34.2' opens, the first and third valve elements 34.1' and 34.3' remains closed. When the third valve element 34.3' opens the first and second valve elements 34.1' and 34.2' remains closed.

If there is a need to increase quickly the load of the engine, extra air is needed to be injected into cylinders of the engine very fast. Particularly, during acceleration, there is a need to increase the load very quickly which requires that extra air is injected very fast into cylinders of the engine. Advantageously, the third control valve 33 is used as a mechanical backup system for the first control valve 30 during an acceleration of the engine. According to an embodiment of the invention, the second control valve 32 is used as a mechanical back-up for the first valve 30 during a starting procedure whereas the third control valve is used as a mechanical backup for the first valve 30 during an acceleration procedure.

In case the at least one acceleration characteristic will not reach the set target value, the pneumatically operated actuator device 28 is controlled by the third control valve 33 via which the pressure medium source 22 is controllably connected to the pneumatically operated actuator device 28. In case the acceleration characteristic(s) will reach the set target value(s), the pneumatically operated actuator device 28 is controlled by the first control valve 30 that is in this embodiment the solenoid valve. According to an embodiment of the invention, in the acceleration procedure the pneumatically operated actuator device 28 is controlled primarily by the first control valve 30.

In Figure 4, the pneumatically operated actuator device 28 comprises three separate chambers: the first chamber 44', the second chamber 44" and a third chamber 44"'. In this embodiment, the third chamber 44'" is arranged between the first chamber 44' and the second chamber 44". The third control fluid branch 36'" leads via the third control valve 33 to the third chamber 44"'.

The third chamber 44'" is provided with a spring element 42''' similarly as the first chamber 44' and the second chamber 44". However, it is possible that only one chamber is provided with a spring element. The stem 24' is provided with a third piston element 40'" arranged to reciprocate in the third chamber 44'" so as to control opening and closing of the injection valve 24.

The third control valve 33 arranged in the third control fluid branch 36'" of the control fluid conduit 36 is arranged in mechanical and/or hydraulic connection 54 with a cam 66' of the engine 10. Thus, the operation of the third control valve 33 is directly related to the position of the cam 66' of the engine 10.

Advantageously, the second control valve 32 is arranged in connection 52 with an inlet cam and the third control valve 33 is arranged in connection 54 with an exhaust cam. In other words, the start timing function is obtained from the inlet cam and the acceleration timing function is obtained from the exhaust cam 66' during a backup operation. This provides a robust cam timing for both starting operation and acceleration operation in case the at least one acceleration or one starting characteristic will not reach the set target value. When the target value or values is/are reached, the first control valve 30 is used during the start of the engine and acceleration of the engine.

The control unit 70 comprises instructions to increase the load of the engine 10. The control unit 70 monitors at least one acceleration characteristic of the engine during the acceleration procedure, such as cranking speed. The control unit is arranged to control and monitor the operation of the third valve 33.

Advantageously, the arrangement as illustrated in Figures 1-4 will bring remarkable benefits to load acceptance of the engine, acceleration level and starting air consumption.

## Claims

1. An internal combustion piston engine (10) comprising an intake channel (12) for introducing oxygen containing gas into cylinders (14) of the engine (10), the engine further comprising an arrangement (20) for introducing additional oxygen containing gas into the cylinders (14) of the engine (10), the arrangement (20) comprising:
- a pressure medium source (22) for supplying the additional oxygen containing gas,
- at least one injection valve (24) arranged in connection with a cylinder (14) of the engine (10) for introducing the additional oxygen containing gas into the cylinder (14) of the engine (14),
- a main flow conduit (26) by means of which the pressure medium source (22) is arranged in flow connection with the at least one injection valve (24),
wherein the injection valve (24) is provided with a pneumatically operated actuator device (28) arranged to accomplish opening and closing of the injection valve (24) under influence of the pressure medium to the actuator device,
**characterized in that**
- the arrangement (20) for introducing additional oxygen containing gas comprises a control fluid conduit (36) for introducing the pressure medium to the pneumatically operated actuator device (28) of the injection valve (24), and that
- the control fluid conduit (36) is provided with a first control valve (30) and a second control valve (32) arranged parallel in the control fluid conduit (36) for control the fluid communication to the pneumatically operated actuator device (28) of the injection valve (24), and that
- the control fluid conduit (36) is provided with a switch valve (34) arranged to provide a flow connection of the control fluid conduit (36) alternatively with one of the first control valve (30) and the second control valve (32).

2. An internal combustion piston engine (10) according to claim 1, **characterized in that** the control fluid conduit (36) extends from the main flow conduit (16) to the pneumatically operated actuator device (28) of the injection valve (24).

3. An internal combustion piston engine (10) according to claim 1, **characterized in that** the first control valve (30) and the second control valve (32) coupled with a common pneumatically operated actuator device (28) arranged to accomplish opening and closing of the injection valve (24) under influence of the pressure medium.

4. An internal combustion piston engine (10) according to claim 1, **characterized in that** the first control valve (30) and the second control valve (32) coupled with a dedicated pneumatically operated actuator device (28), each of which is arranged to accomplish opening and closing of the injection valve (24) under influence of the pressure medium.

5. An internal combustion piston engine (10) according to claim 1, **characterized in that** the second control valve (32) is actuated by a cam (66) in the engine (10).

6. An internal combustion piston engine (10) according to claim 1, **characterized in that** the first control valve (30) is solenoid actuated.

7. An internal combustion piston engine (10) according to claim 1, **characterized in that** the arrangement (20) comprises a control unit (70) comprising instructions to control an operation of the first control valve (30).

8. An internal combustion piston engine (10) according to claim 1, **characterized in that** the arrangement (20) comprises a third control valve (33) arranged parallel with the first control valve (30) and the second control valve (32) in the control fluid conduit (36) for controlling the fluid communication to the pneumatically operated actuator device (28) of the injection valve (24) and that the switch valve (34) is arranged to provide a flow connection of the control fluid conduit (36) alternatively with one of the first control valve (30), the second control valve (32) and the third control valve (33).

9. An internal combustion piston engine (10) according to claim 8, **characterized in that** the third control valve (33) is actuated by a cam (66') in the engine.

10. An internal combustion piston engine (10) according to claim 1, **characterized in that** the arrangement (20) comprises a control unit (70) comprising instructions to control an operation of the engine using the method according to claims 11-14.

11. A method of starting an internal combustion piston engine (10), in which method during the starting procedure
- the pressurized air is led from a pressure medium source (22) to a number of individual cylinders (14) of the engine (10) via at least one injection valve (24) arranged in connection with the cylinders (14) of the engine (10),
- the at least one injection valve (24) is actuated between open and closed position by a pneumatically operated actuator device (28) arranged to accomplish opening and closing of the injection valve (24) under influence of the pressure medium to be open during the power stroke of the cylinder (14) such that the engine (10) is cranked by means of the introduced pressurized air,
- at least one starting characteristic (e.g. cranking speed) of the engine (10) is monitored during the starting procedure and a set target value is assigned to the at least one starting characteristic,
- the pneumatically operated actuator device (28) is controlled by a first control valve (30) via which the pressure medium source (22) is controllably connected to the pneumatically operated actuator device (28),
- in case the at least one starting characteristic will not reach the set target value, the pneumatically operated actuator device (28) is controlled by a second control valve (32) via which the pressure medium source (22) is controllably connected to the pneumatically operated actuator device (28), and which second control valve (32) is operated by a cam (66) system of the engine (10),
- an introduction of the pressure medium to the pneumatically operated actuator (28) is controlled by a switch valve (34) that introduces the pressure medium alternatively with one of the first control valve (30) or the second control valve (32).

12. A method of starting an internal combustion piston engine (10) according to claim 11, **characterized in that** the pneumatically operated actuator device (28) is controlled by the first control valve (30) being a solenoid valve.

13. A method of starting an internal combustion piston engine according to claim 11, **characterized in** controlling the first control valve (30) in response to a crank angle.

## Patentansprüche

1. Kolben-Verbrennungskraftmaschine (10), die einen Ansaugkanal (12) zum Einleiten von sauerstoffhaltigem Gas in Zylinder (14) der Kraftmaschine (10) umfasst, wobei die Kraftmaschine ferner eine Anordnung (20) zum Einleiten von zusätzlichem sauerstoffhaltigem Gas in die Zylinder (14) der Kraftmaschine (10) umfasst, wobei die Anordnung (20) Folgendes umfasst:
- eine Druckmedienquelle (22) zum Zuführen des zusätzlichen sauerstoffhaltigen Gases,
- wenigstens ein Einspritzventil (24), das in Verbindung mit einem Zylinder (14) der Kraftmaschine (10) angeordnet ist, zum Einleiten des zusätzlichen sauerstoffhaltigen Gases in den Zylinder (14) der Kraftmaschine (10),
- eine Hauptdurchflussleitung (26), mit deren Hilfe die Druckmedienquelle (22) in Durchflussverbindung mit dem wenigstens einen Einspritzventil (24) angeordnet ist,
wobei das Einspritzventil (24) mit einer pneumatisch betätigten Antriebseinrichtung (28) versehen ist, die dafür angeordnet ist, unter Einfluss des Druckmediums auf die Antriebseinrichtung ein Öffnen und Schließen des Einspritzventils (24) durchzuführen,
**dadurch gekennzeichnet, dass**
- die Anordnung (20) zum Einleiten von zusätzlichem sauerstoffhaltigem Gas eine Steuerfluidleitung (36) zum Einleiten des Druckmediums zu der pneumatisch betätigten Antriebseinrichtung (28) des Einspritzventils (24) umfasst und dass
- die Steuerfluidleitung (36) mit einem ersten Steuerventil (30) und einem zweiten Steuerventil (32) versehen ist, die parallel in der Steuerfluidleitung (36) angeordnet sind, um die Fluidverbindung zu der pneumatisch betätigten Antriebseinrichtung (28) des Einspritzventils (24) zu steuern, und dass
- die Steuerfluidleitung (36) mit einem Schaltventil (34) versehen ist, das dafür angeordnet ist, eine Durchflussverbindung der Steuerfluidleitung (36) abwechselnd mit einem von dem ersten Steuerventil (30) und dem zweiten Steuerventil (32) bereitzustellen.

2. Kolben-Verbrennungskraftmaschine (10) nach Anspruch 1, **dadurch gekennzeichnet, dass** sich die Steuerfluidleitung (36) von der Hauptdurchflussleitung (16) bis zu der pneumatisch betätigten Antriebseinrichtung (28) des Einspritzventils (24) erstreckt.

3. Kolben-Verbrennungskraftmaschine (10) nach Anspruch 1, **dadurch gekennzeichnet, dass** das erste Steuerventil (30) und das zweite Steuerventil (32) mit einer gemeinsamen pneumatisch betätigten Antriebseinrichtung (28) verbunden sind, die dafür angeordnet ist, unter Einfluss des Druckmediums das Öffnen und Schließen des Einspritzventils (24) durchzuführen.

4. Kolben-Verbrennungskraftmaschine (10) nach Anspruch 1, **dadurch gekennzeichnet, dass** das erste Steuerventil (30) und das zweite Steuerventil (32) mit einer dedizierten pneumatisch betätigten Antriebseinrichtung (28) verbunden sind, deren jede dafür angeordnet ist, unter Einfluss des Druckmediums das Öffnen und Schließen des Einspritzventils (24) durchzuführen.

5. Kolben-Verbrennungskraftmaschine (10) nach Anspruch 1, **dadurch gekennzeichnet, dass** das zweite Steuerventil (32) durch einen Nocken (66) in der Kraftmaschine (10) betätigt wird.

6. Kolben-Verbrennungskraftmaschine (10) nach Anspruch 1, **dadurch gekennzeichnet, dass** das erste Steuerventil (30) durch eine Magnetspule betätigt wird.

7. Kolben-Verbrennungskraftmaschine (10) nach Anspruch 1, **dadurch gekennzeichnet, dass** die Anordnung (20) eine Steuereinheit (70) umfasst, die Anweisungen umfasst, um einen Betrieb des ersten Steuerventils (30) zu steuern.

8. Kolben-Verbrennungskraftmaschine (10) nach Anspruch 1, **dadurch gekennzeichnet, dass** die Anordnung (20) ein drittes Steuerventil (33) umfasst, das parallel mit dem ersten Steuerventil (30) und dem zweiten Steuerventil (32) in der Steuerfluidleitung (36) angeordnet ist, zum Steuern der Fluidverbindung zu der pneumatisch betätigten Antriebseinrichtung (28) des Einspritzventils (24), und dass das Schaltventil (34) dafür angeordnet ist, eine Durchflussverbindung der Steuerfluidleitung (36) abwechselnd mit einem von dem ersten Steuerventil (30), dem zweiten Steuerventil (32) und dem dritten Steuerventil (33) bereitzustellen.

9. Kolben-Verbrennungskraftmaschine (10) nach Anspruch 8, **dadurch gekennzeichnet, dass** das dritte Steuerventil (33) durch einen Nocken (66') in der Kraftmaschine betätigt wird.

10. Kolben-Verbrennungskraftmaschine (10) nach Anspruch 1, **dadurch gekennzeichnet, dass** die Anordnung (20) eine Steuereinheit (70) umfasst, die Anweisungen umfasst, um einen Betrieb der Kraftmaschine unter Verwendung des Verfahrens nach Anspruch 11 bis 14 zu steuern.

11. Verfahren zum Starten einer Kolben-Verbrennungskraftmaschine (10), wobei in dem Verfahren während des Startvorgangs
- die Druckluft von einer Druckmedienquelle (22) zu einer Anzahl von einzelnen Zylindern (14) der Kraftmaschine (10) geleitet wird, über wenigstens ein Einspritzventil (24), das in Verbindung mit den Zylindern (14) der Kraftmaschine (10) angeordnet ist,
- das wenigstens eine Einspritzventil (24) zwischen einer offenen und einer geschlossenen Stellung betätigt wird, durch eine pneumatisch betätigte Antriebseinrichtung (28), die dafür angeordnet ist, unter Einfluss des Druckmediums ein Öffnen und Schließen des Einspritzventils (24) durchzuführen, damit es während des Arbeitshubs des Zylinders (14) offen ist, so dass die Kraftmaschine (10) mit Hilfe der eingeleiteten Druckluft angekurbelt wird,
- wenigstens eine Startcharakteristik (z. B. eine Drehzahl) der Kraftmaschine (10) während des Startvorgangs überwacht wird und der wenigstens einen Startcharakteristik ein festgesetzter Zielwert zugewiesen wird,
- die pneumatisch betätigte Antriebseinrichtung (28) durch ein erstes Steuerventil (30) gesteuert wird, über das die Druckmedienquelle (22) steuerbar mit der pneumatisch betätigten Antriebseinrichtung (28) verbunden ist,
- falls die wenigstens eine Startcharakteristik nicht den festgesetzten Zielwert erreichen wird, die pneumatisch betätigte Antriebseinrichtung (28) durch ein zweites Steuerventil (32) gesteuert wird, über das die Druckmedienquelle (22) steuerbar mit der pneumatisch betätigten Antriebseinrichtung (28) verbunden ist, und wobei das zweite Steuerventil (32) durch ein Nockensystem (66) der Kraftmaschine (10) gesteuert wird,
- ein Einleiten des Druckmediums zu dem pneumatisch betätigten Antrieb (28) durch ein Schaltventil (34) gesteuert wird, welches das Druckmedium abwechselnd mit einem von dem ersten Steuerventil (30) oder dem zweiten Steuerventil (32) einleitet.

12. Verfahren zum Starten einer Kolben-Verbrennungskraftmaschine (10) nach Anspruch 11, **dadurch gekennzeichnet, dass** die pneumatisch betätigte Antriebseinrichtung (28) durch das erste Steuerventil (30) gesteuert wird, das ein Magnetventil ist.

13. Verfahren zum Starten einer Kolben-Verbrennungskraftmaschine (10) nach Anspruch 11, **gekennzeichnet durch** Steuern des ersten Steuerventils (30) in Reaktion auf einen Kurbelwinkel.

## Revendications

1. Moteur à piston à combustion interne (10) comprenant un canal d'admission (12) pour introduire du gaz contenant de l'oxygène dans des cylindres (14) du moteur (10), le moteur comprenant en outre un agencement (20) pour introduire du gaz contenant de l'oxygène supplémentaire dans les cylindres (14) du moteur (10), l'agencement (20) comprenant :
- une source de fluide sous pression (22) pour fournir le gaz contenant de l'oxygène supplémentaire,
- au moins une soupape d'injection (24) disposée en connexion avec un cylindre (14) du moteur (10) pour introduire le gaz contenant de l'oxygène supplémentaire dans le cylindre (14) du moteur (14),
- un conduit d'écoulement principal (26) au moyen duquel la source de fluide sous pression (22) est disposée en communication fluidique avec l'au moins une soupape d'injection (24),
dans lequel la soupape d'injection (24) est dotée d'un dispositif d'actionnement à commande pneumatique (28) étudié pour accomplir l'ouverture et la fermeture de la soupape d'injection (24) sous l'influence du fluide sous pression du dispositif d'actionnement,
**caractérisé en ce que**
- l'agencement (20) pour introduire du gaz contenant de l'oxygène supplémentaire comprend un conduit de fluide de commande (36) pour introduire le fluide sous pression dans le dispositif d'actionnement à commande pneumatique (28) de la soupape d'injection (24), et **en ce que**
- le conduit de fluide de commande (36) est doté d'une première soupape de commande (30) et d'une deuxième soupape de commande (32) disposées parallèlement dans le conduit de fluide de commande (36) pour commander la communication fluidique avec le dispositif d'actionnement à commande pneumatique (28) de la soupape d'injection (24), et **en ce que**
- le conduit de fluide de commande (36) est doté d'une soupape de commutation (34) étudiée pour fournir une communication fluidique du conduit de fluide de commande (36), en alternance, avec l'une parmi la première soupape de commande (30) et la deuxième soupape de commande (32).

2. Moteur à piston à combustion interne (10) selon la revendication 1, **caractérisé en ce que** le conduit de fluide de commande (36) s'étend depuis le conduit d'écoulement principal (16) jusqu'au dispositif d'actionnement à commande pneumatique (28) de la soupape d'injection (24).

3. Moteur à piston à combustion interne (10) selon la revendication 1, **caractérisé en ce que** la première soupape de commande (30) et la deuxième soupape de commande (32) sont couplées avec un dispositif d'actionnement à commande pneumatique commun (28) étudié pour accomplir l'ouverture et la fermeture de la soupape d'injection (24) sous l'influence du fluide sous pression.

4. Moteur à piston à combustion interne (10) selon la revendication 1, **caractérisé en ce que** la première soupape de commande (30) et la deuxième soupape de commande (32) sont couplées à un dispositif d'actionnement à commande pneumatique dédié (28), chacun d'entre eux étant étudié pour accomplir l'ouverture et la fermeture de la soupape d'injection (24) sous l'influence du fluide sous pression.

5. Moteur à piston à combustion interne (10) selon la revendication 1, **caractérisé en ce que** la deuxième soupape de commande (32) est actionnée par une came (66) dans le moteur (10).

6. Moteur à piston à combustion interne (10) selon la revendication 1, **caractérisé en ce que** la première soupape de commande (30) est actionnée par un solénoïde.

7. Moteur à piston à combustion interne (10) selon la revendication 1, **caractérisé en ce que** l'agencement (20) comprend une unité de commande (70) comprenant des instructions pour commander un fonctionnement de la première soupape de commande (30).

8. Moteur à piston à combustion interne (10) selon la revendication 1, **caractérisé en ce que** l'agencement (20) comprend une troisième soupape de commande (33) disposée parallèlement à la première soupape de commande (30) et la deuxième soupape de commande (32) dans le conduit de fluide de commande (36) pour commander la communication fluidique avec le dispositif d'actionnement à commande pneumatique (28) de la soupape d'injection (24), et **en ce que** la soupape de commutation (34) est étudiée pour fournir une communication fluidique du conduit de fluide de commande (36), en alternance, avec l'une parmi la première soupape de commande (30), la deuxième soupape de commande (32), et la troisième soupape de commande (33) .

9. Moteur à piston à combustion interne (10) selon la revendication 8, **caractérisé en ce que** la troisième soupape de commande (33) est actionnée par une came (66') dans le moteur.

10. Moteur à piston à combustion interne (10) selon la revendication 1, **caractérisé en ce que** l'agencement (20) comprend une unité de commande (70) comprenant des instructions pour commander un fonctionnement du moteur en utilisant le procédé selon les revendications 11 à 14.

11. Procédé de démarrage d'un moteur à piston à combustion interne (10), dans lequel procédé, pendant la procédure de démarrage,
- l'air sous pression est envoyé d'une source de fluide sous pression (22) vers un certain nombre de cylindres individuels (14) du moteur (10) via au moins une soupape d'injection (24) disposée en connexion avec les cylindres (14) du moteur (10),
- au moins une soupape d'injection (24) est actionnée entre une position ouverte et fermée par un dispositif d'actionnement à commande pneumatique (28) étudié pour accomplir l'ouverture et la fermeture de la soupape d'injection (24) sous l'influence du fluide sous pression pour être ouverte pendant la course de détente du cylindre (14) de sorte que le moteur (10) est lancé au moyen de l'air sous pression introduit,
- au moins une caractéristique de démarrage (par exemple vitesse de lancement) du moteur (10) est surveillée pendant la procédure de démarrage, et une valeur cible fixée est assignée à l'au moins une caractéristique de démarrage,
- le dispositif d'actionnement à commande pneumatiquement (28) est commandé par une première soupape de commande (30) via laquelle la source de fluide sous pression (22) est connectée de façon à pouvoir être commandée au dispositif d'actionnement à commande pneumatique (28),
- dans le cas où l'au moins une caractéristique de démarrage n'atteint pas la valeur cible fixée, le dispositif d'actionnement à commande pneumatique (28) est commandé par une deuxième soupape de commande (32) via laquelle la source de fluide sous pression (22) est connectée de façon à pouvoir être commandée au dispositif d'actionnement à commande pneumatique (28), et laquelle deuxième soupape de commande (32) est actionnée par un système de came (66) du moteur (10),
- une introduction du fluide sous pression dans l'actionneur à commande pneumatique (28) est commandée par une soupape de commutation (34) qui introduit le fluide sous pression, en alternance, avec l'une parmi la première soupape de commande (30) ou la deuxième soupape de commande (32).

12. Procédé de démarrage d'un moteur à piston à combustion interne (10) selon la revendication 11, **caractérisé en ce que** le dispositif d'actionnement à commande pneumatique (28) est commandé par la première soupape de commande (30) qui est une soupape à solénoïde.

13. Procédé de démarrage d'un moteur à piston à combustion interne selon la revendication 11, **caractérisé par** la commande de la première soupape de commande (30) en réponse à un angle de vilebrequin.
